# DEMANDE DE BREVET EUROPEEN

(11) **EP 2 048 771 A1**
(43) Date de publication de la demande: **15.04.2009**
(21) Numéro de dépôt: 07108908.0
(22) Date de dépôt: 25.05.2007
(51) Int. Cl.: H02M 1/12

(54) **Dispositif de filtrage CEM dans un variateur de vitesse**

(30) Priorité: 07.06.2006 FR 0652040
(71) Demandeur: Schneider Toshiba Inverter Europe SAS, 27120 Pacy sur Eure (FR)
(72) Inventeur: Baudesson, Philippe, 27220, La Boissiere (FR); Lafontaine, Jean, 78600, Maisons Lafitte (FR); Nourisson, Alain, Schneider Toshiba Inverter Europe SAS, 27120, Pacy Sur Eure (FR)
(74) Mandataire: Dufresne, Thierry

(57) **Abrégé**

L'invention concerne un dispositif de filtrage connecté entre un module redresseur d'un variateur de vitesse et un réseau d'alimentation alternatif, le dispositif de filtrage comportant un filtre CEM comprenant une inductance de mode commun possédant un enroulement sur chaque phase du réseau d'alimentation, les enroulements étant couplés magnétiquement entre eux. Le dispositif de filtrage comprend un circuit de dérivation connecté en parallèle avec au moins un des enroulements de l'inductance de mode commun, le circuit de dérivation étant constitué de composants passifs et permettant de dériver un courant de mode commun circulant dans l'inductance de mode commun dans une zone de fréquence autour d'une fréquence de résonance du filtre CEM.

## Description

La présente invention se rapporte à un dispositif de filtrage, en particulier un dispositif de filtrage CEM (Compatibilité Electro-Magnétique) utilisé en entrée d'un variateur de vitesse de type convertisseur de fréquence qui est alimenté par un réseau d'alimentation alternatif et qui est destiné à la commande d'une charge électrique, telle qu'un moteur électrique synchrone ou asynchrone. L'invention concerne également un variateur de vitesse comprenant un tel dispositif de filtrage.

De façon connue, un variateur de vitesse du type convertisseur de fréquence comporte un module redresseur qui fournit une tension continue à partir d'un réseau d'alimentation alternatif extérieur et un module onduleur (ou hacheur). Ce module onduleur comprend des composants électroniques semi-conducteurs de puissance pour hacher la tension continue en Modulation de Largeur d'Impulsion (MLI ou Pulse Width Modulation PWM), de façon à fournir en sortie via un câble puissance une tension électrique variable pulsée et une fréquence de rotation variable au moteur. Un dispositif de commande du variateur contrôle la conduction et le blocage des composants semi-conducteurs à la fréquence d'échantillonnage, pour commander le moteur en MLI avec une tension variable appropriée.

La fréquence de commutation pour la commande MLI des composants semi-conducteurs de puissance correspond à la fréquence d'échantillonnage du variateur. En fonction du type et du calibre de variateur, cette fréquence de commutation varie généralement entre approximativement 2 et 16 kHz, correspondant à des périodes d'échantillonnage entre 62 à 500 µsec.

La commutation des composants électroniques semi-conducteurs de puissance génère en sortie du variateur de vitesse une variation de la tension de mode commun entraînant en amont et en aval du système de conversion des perturbations électromagnétiques de même mode, au travers d'un bouclage par la terre des courants de fuite dus notamment aux capacités parasites du moteur et du câble puissance. Un dispositif de filtrage est donc souvent utilisé pour atténuer les courants de mode commun absorbés au réseau de distribution électrique et éviter leur propagation vers le réseau d'alimentation.

Un filtre CEM est placé en amont du module redresseur du variateur de vitesse et est connecté entre le réseau d'alimentation alternatif et le module redresseur du variateur. Suivant la taille et le type du variateur, le filtre peut être soit intégré dans le boîtier du variateur, soit externe au variateur. Pour répondre notamment aux normes européennes actuelles en matière de compatibilité électromagnétique, le filtre CEM doit être efficace dans une zone de fréquence située entre 150 kHz à 30 MHz.

Le filtre CEM est habituellement composé d'une inductance de mode commun comprenant un enroulement sur chaque phase du réseau d'alimentation, et de condensateurs de mode commun reliés entre chaque phase et la terre, en aval de l'inductance de mode commun. Il forme ainsi un circuit passif de type passe-bas avec une fréquence de coupure permettant d'obtenir l'atténuation désirée des courants de mode commun dans la zone de fréquence fixée par les normes.

La fréquence de coupure souhaitée du filtre CEM fixe les valeurs des condensateurs et de l'inductance de mode commun. La valeur des condensateurs de mode commun est en générale constante. Par contre, la valeur de l'inductance de mode commun dépend fortement des courants de mode commun qui la traverse. Ces courants sont fonctions de la tension de mode commun générée par la commutation des interrupteurs du variateur de vitesse et des capacités parasites des principaux éléments que sont le moteur et le câble puissance. En fonction du niveau accepté des courants de mode commun, l'inductance de mode commun doit être dimensionnée pour ne pas saturer.

Le filtre CEM étant du deuxième ordre, ce circuit passif comporte une fréquence de résonance proche de sa fréquence de coupure. Ainsi, il se peut que, dans une certaine bande de fréquence autour de la fréquence de résonance, le filtre CEM amplifie les courants de mode commun au lieu de les atténuer, ce qui peut favoriser la saturation de l'inductance.

La valeur de cette fréquence de résonance dépend évidemment de la valeur de l'inductance de mode commun, laquelle dépend de la valeur du courant de mode commun. Donc, la fréquence de résonance varie suivant que le variateur de vitesse entraîne ou non une charge. Ainsi, la fréquence de résonance peut être par exemple de l'ordre de 8 à 16 kHz pour une inductance du filtre CEM en ferrite, et par exemple de l'ordre de 2 à 8 kHz pour une inductance en matériau nano-cristallin. Il se trouve que ces valeurs sont proches des valeurs de fréquences d'échantillonnage habituelles d'un variateur.

Pour une meilleure efficacité du filtrage, il serait donc souhaitable de mettre en place un dispositif de filtrage comportant des moyens permettant d'éviter de manière très simple et économique la saturation de l'inductance de mode commun du filtre CEM dans la zone de fréquence de résonance du filtre CEM (aux alentours de quelques kHz), sans pour autant pénaliser les performances du filtre CEM dans la zone de fréquence normative de filtrage, au-delà de 150 kHz.

C'est pourquoi l'invention décrit un dispositif de filtrage connecté entre un module redresseur d'un variateur de vitesse et un réseau d'alimentation alternatif, le dispositif de filtrage comportant un filtre CEM comprenant une inductance de mode commun possédant un enroulement sur chaque phase du réseau d'alimentation, lesdits enroulements étant couplés magnétiquement entre eux. Le dispositif de filtrage comprend un circuit de dérivation connecté en parallèle avec au moins un des enroulements de l'inductance de mode commun, le circuit de dérivation étant constitué de composants passifs et permettant de dériver un courant de mode commun circulant dans l'inductance de mode commun dans une zone de fréquence autour d'une fréquence de résonance du filtre CEM.

Selon un premier mode de réalisation, le circuit de dérivation comporte une inductance de dérivation dont la valeur est inférieure à la valeur de l'inductance de mode commun dans la zone de fréquence de résonance du filtre CEM et est supérieure à la valeur de l'inductance de mode commun dans la zone de fréquence de filtrage du filtre CEM. L'inductance de mode commun est réalisée en nano-cristallin et l'inductance de dérivation est réalisée en ferrite.

Selon une caractéristique, le circuit de dérivation comporte en plus une résistance de dérivation reliée en série avec l'inductance de dérivation.

Selon un autre mode de réalisation, le circuit de dérivation comporte un premier filtre passe-bande connecté en parallèle avec au moins un des enroulements de l'inductance de mode commun et composé d'une première inductance reliée en série avec un premier condensateur, l'impédance du premier filtre passe-bande étant minimale autour d'une première valeur de la fréquence de résonance du filtre CEM. Préférentiellement, l'inductance de mode commun et l'inductance du premier filtre passe-bande sont réalisées en ferrite.

Selon une caractéristique, le circuit de dérivation comporte également un second filtre passe-bande connecté en parallèle avec au moins un des enroulements de l'inductance de mode commun et composé d'une seconde inductance reliée en série avec un second condensateur, l'impédance du second filtre passe-bande étant minimale autour d'une seconde valeur de la fréquence de résonance du filtre CEM. Préférentiellement, l'inductance du second filtre passe bande est réalisée en ferrite.

L'invention concerne également un variateur de vitesse alimenté par un réseau d'alimentation alternatif extérieur et destiné à la commande d'un moteur électrique, et comportant un tel dispositif de filtrage.

D'autres caractéristiques et avantages vont apparaître dans la description détaillée qui suit en se référant à un mode de réalisation donné à titre d'exemple et représenté par les dessins annexés sur lesquels :
- la figure 1 montre un schéma de principe simplifié connu d'un variateur de vitesse,
- la figure 2 représente un premier mode de réalisation d'un dispositif de filtrage CEM conforme à l'invention,
- la figure 3 montre une variante du premier mode de réalisation,
- la figure 4 montre une seconde variante du premier mode de réalisation,
- la figure 5 schématise un diagramme simplifié de valeurs d'inductances en fonction de la fréquence,
- la figure 6 représente un deuxième mode de réalisation d'un dispositif de filtrage CEM conforme à l'invention,
- la figure 7 montre une variante du deuxième mode de réalisation.

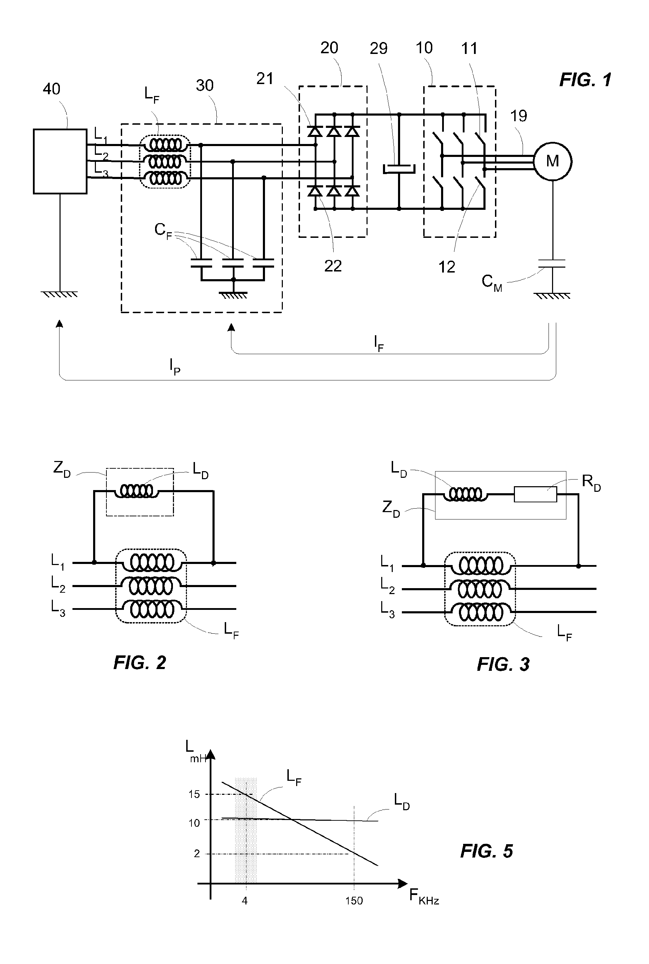

En référence au schéma de principe simplifié de la figure 1, un variateur de vitesse est destiné à la commande d'un moteur électrique M de type synchrone ou asynchrone. Le variateur comprend un module onduleur 10 relié au moteur M par un câble de puissance 19. Pour chaque phase du moteur, le module onduleur 10 comprend deux composants électroniques semi-conducteurs de puissance 11,12, de type IGBT ou autres (représentés sur la figure 1 comme de simples interrupteurs pour simplifier le dessin), capables de fournir une tension pulsée en MLI au moteur M à partir d'un bus continu de tension. Chaque conducteur du câble de puissance 19 est relié entre les composants 11 et 12 correspondants aux phases respectives.

En amont du module onduleur 10, le variateur comporte également un module redresseur 20 qui délivre le bus continu de tension pour alimenter le module onduleur 10. Un condensateur de ballast 29 est placé entre le module redresseur 20 et le module onduleur 10.

Le module redresseur 20 est alimenté par une source d'alimentation extérieure 40 fournissant une tension alternative triphasée L1,L2,L3, par exemple dans un réseau de type TT où le neutre est relié à la terre. De façon classique, le module redresseur 20 comprend pour chaque phase un pont de diodes 21,22 positionnées de façon à fournir le bus continu de tension. L'exemple décrit prévoit un réseau d'alimentation extérieur triphasé, mais l'invention s'applique de façon équivalente à un réseau d'alimentation monophasé. De même, le moteur M décrit dans la figure 1 est alimenté en triphasé mais l'invention s'applique évidemment aussi à un moteur électrique alimenté en monophasé.

Un filtre CEM 30 est positionné entre la source d'alimentation extérieure 40 et le module redresseur 20. Les caractéristiques de ce filtre CEM sont calculées pour permettre au variateur de vitesse de répondre aux normes CEM dans une zone de fréquence au-delà de 150 kHz. Le filtre CEM 30 comporte une inductance de mode commun L_{F} connectée en série entre la source 40 et le module redresseur 20. Elle est composée de trois enroulements pour les trois phases L1,L2,L3 du réseau alternatif triphasé d'entrée (un enroulement par phase), ces trois enroulements étant magnétiquement couplés entre eux. Le filtre CEM 30 comporte également des condensateurs de mode commun C_{F} connectés entre chaque phase L1,L2,L3 et la terre, en aval de l'inductance de mode commun L_{F}.

On sait que le moteur M et le câble 19 ont des capacités parasites réparties à la terre que l'on peut modéliser par une capacité commune C_{M}. La commutation des composants 11,12 du module onduleur 10 entraîne des variations de tension très importantes qui provoquent la création d'un courant de mode commun I_{mc} égal à I_{mc} = C_{M} * dV/dt.

Ce courant de mode commun I_{MC} se reboucle par la terre via la capacité moteur+câble C_{M} en empruntant soit un chemin noté I_{F} dans la figure 1, via les diodes 21, les composants 11, C_{M}, C_{F} (ou 22, 12, C_{M}, C_{F}), soit un chemin noté I_{P} via les diodes 21, les composants 11, C_{M}, 40, L_{F} (ou 22, 12, C_{M}, 40, L_{F}). Pour minimiser la propagation des perturbations sur le réseau extérieur, on souhaite évidemment privilégier le chemin I_{F} plutôt que le chemin I_{P} pour éviter de propager les perturbations sur le réseau électrique extérieur. Dans ce but, on utilise donc des valeurs d'impédances faibles pour les condensateurs de mode commun C_{F1},C_{F2},C_{F3} et des valeurs d'impédances fortes pour l'inductance de mode commun L_{F}.

Néanmoins, plus le câble 19 est long, plus la capacité C_{M} augmente et plus le courant de mode commun I_{MC} augmente. Il y a alors risque de saturation de l'inductance de mode commun L_{F} dans certaines applications. Dans ce cas, le chemin I_{F} risque de ne plus être privilégié ce qui va nuire aux performances du filtre CEM. Ce risque de saturation peut être accentué au moment des commutations des composants semi-conducteurs de puissance 11,12, c'est à dire à une fréquence de commutation pour la commande MLI des composants de puissance. Cette fréquence de commutation correspond à la fréquence d'échantillonnage du variateur, c'est-à-dire généralement entre approximativement 2 et 16 kHz.

Ainsi, à cette fréquence d'échantillonnage, on risque de voir apparaître côté réseau d'alimentation des pics de courant dus à la saturation de l'inductance de mode commun L_{F} lorsque le courant de mode commun I_{MC}, généré par les commutations des composants 11,12 du module onduleur 10, est important et amplifié par la résonance du filtre CEM d'entrée. Il faut donc trouver des moyens pour amortir la résonance du filtre CEM et limiter ainsi la hausse du courant de mode commun I_{MC} circulant dans l'inductance de mode commun L_{F}.

C'est pourquoi, l'invention propose un dispositif de filtrage qui soit capable d'amortir la résonance du filtre CEM et limiter la hausse du courant de mode commun I_{MC} dans la zone de fréquence de résonance du filtre CEM, sans influencer les performances du filtre CEM dans la zone de fréquence au-delà de 150 kHz, pour répondre aux normes CEM.

Pour cela, le dispositif de filtrage comprend un circuit de dérivation Z_{D}, Z'_{D} connecté en parallèle avec au moins un des enroulements de l'inductance de mode commun L_{F}. Le circuit de dérivation Z_{D}, Z'_{D} est simplement constitué de composants passifs (c'est-à-dire des composants de type résistance, inductance, capacité) choisis de façon à pouvoir dériver une partie prépondérante du courant de mode commun vers ce circuit de dérivation, pour une zone de fréquence autour d'une fréquence de résonance du filtre CEM. Ainsi, dans cette zone de fréquence particulière, il permet donc de diminuer le courant de mode commun circulant dans l'inductance de mode commun du filtre CEM, de façon à éviter sa saturation.

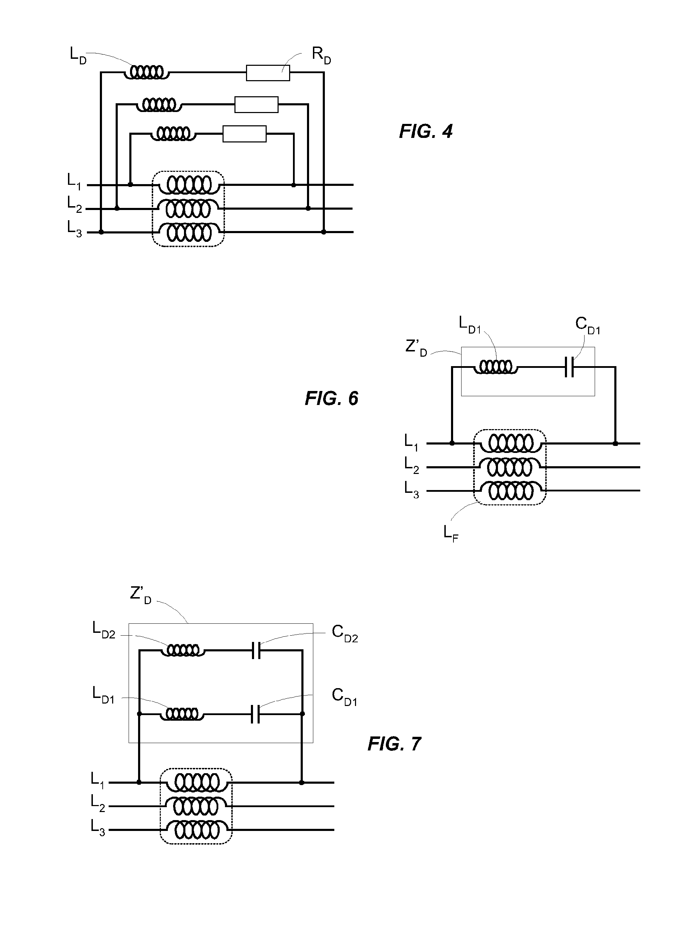

Les figures 2 à 4 se rapportent à un premier mode de réalisation du dispositif de filtrage, qui est adapté en particulier lorsque l'inductance de mode commun L_{F} est en matériau nano-cristallin. Les figures 6 et 7 se rapportent à un second mode de réalisation du dispositif de filtrage, qui est adapté en particulier lorsque l'inductance de mode commun L_{F} est en ferrite.

La figure 2 montre un premier exemple de réalisation d'un dispositif de filtrage passif extrêmement simple et économique. Le dispositif de filtrage comporte un circuit de dérivation Z_{D} connecté en parallèle avec un des enroulements de l'inductance de mode commun L_{F}. Ce circuit de dérivation Z_{D} est uniquement composé d'une inductance de dérivation L_{D}.

L'inductance de dérivation L_{D} est choisie pour que, dans la zone de fréquence autour de la fréquence de résonance du filtre CEM (quelques kHz), la valeur de l'inductance L_{D} soit inférieure à la valeur de l'inductance de mode commun L_{F}, de façon à privilégier le passage du courant dans le circuit de dérivation via l'inductance de dérivation L_{D} dans cette zone de fréquence.

Réciproquement, l'inductance L_{D} est également choisie pour que, dans la zone de fréquence de filtrage du dispositif de filtrage CEM (au-delà de 150 kHz), la valeur de l'inductance L_{D} soit supérieure à la valeur de l'inductance de mode commun L_{F}, de façon à privilégier le passage du courant dans le circuit principal via l'inductance de mode commun L_{F} dans cette zone de fréquence, et donc de façon à conserver les capacités de filtrage du filtre CEM.

L'inductance de dérivation L_{D} comporte une résistance interne qui permet quant à elle de favoriser le passage du courant dans l'inductance de mode commun L_{F} aux dépens du circuit de dérivation Z_{D}, pour la zone de fréquence d'alimentation du réseau alternatif (50 ou 60 Hz), car on souhaite en effet privilégier le passage du courant dans le circuit principal à cette fréquence. Si la résistance interne de l'inductance L_{D} n'est pas suffisamment supérieure à celle de l'inductance de mode commun L_{F}, l'invention prévoit une variante représentée dans la figure 3 dans laquelle le circuit de dérivation Z_{D} est composé d'une inductance de dérivation L_{D} en série avec une résistance de dérivation R_{D}, de façon à plus privilégier le passage du courant dans le circuit principal pour la zone de fréquence d'alimentation du réseau.

En résumé,
- dans la zone de fréquence d'alimentation du réseau, on privilégie le passage du courant dans le circuit principal, grâce à la résistance interne de l'inductance L_{D} ou grâce à la présence additionnelle de la résistance de dérivation R_{D}.
- dans la zone de fréquence d'échantillonnage du variateur et dans la zone de fréquence de résonance du filtre CEM, on veut éviter la saturation de l'inductance de mode commun L_{F} du filtre CEM, et on privilégie donc le passage du courant dans le circuit de dérivation grâce à une valeur de l'inductance L_{D} inférieure à celle de l'inductance L_{F}.
- dans la zone de fréquence de filtrage du filtre CEM, on veut conserver les performances du filtre CEM et on privilégie donc le passage du courant dans le circuit principal grâce à une valeur de l'inductance L_{D} supérieure à celle de l'inductance L_{F}.

Pour parvenir à ces caractéristiques, les enroulements de l'inductance de mode commun L_{F} sont préférentiellement réalisés en matériau nano-cristallin, de manière à avoir une valeur de l'inductance qui diminue fortement en fonction de la fréquence. De plus, l'inductance de dérivation L_{D} est préférentiellement réalisée en matériau ferrite qui a la particularité d'avoir une valeur d'inductance qui varie beaucoup moins en fonction de la fréquence. La figure 5 montre un diagramme simplifié des valeurs des inductances L_{D} et L_{F} en fonction des fréquences, correspondant à une inductance de mode commun L_{F} en nano-cristallin et une inductance de dérivation L_{D} en ferrite. Ce diagramme montre que, par un dimensionnement approprié des inductances L_{D} et L_{F}, le passage de courant est privilégié dans l'inductance de dérivation L_{D} pour la zone de fréquence de résonance du filtre CEM (car L_{D} < L_{F}) et dans l'inductance de mode commun L_{F} pour la zone de fréquence supérieure à 150 kHz (car L_{D} > L_{F}).

Le dispositif de filtrage des figures 2 et 3 présentent un circuit de dérivation pour une seule phase du circuit principal L1, L2, L3. Ce circuit de dérivation est connecté en parallèle d'un seul des enroulements de l'inductance de mode commun L_{F}. L'effet engendré par ce circuit de dérivation se répercute néanmoins sur les autres phases car, comme les enroulements de l'inductance de mode commun L_{F} sont couplés magnétiquement entre eux, les flux magnétiques s'équilibrent entre ces enroulements, et une hausse/baisse du courant dans une des phases entraîne également une légère hausse/baisse du courant dans la ou les autre(s) phase(s).

Selon une variante présentée en figure 4, le circuit de dérivation peut également présenter une inductance de dérivation L_{D} en parallèle avec chaque enroulement de l'inductance de mode commun L_{F}. La figure 4 montre donc trois inductances de dérivation L_{D}, ayant des caractéristiques identiques et correspondant aux trois phases du réseau d'alimentation L1, L2, L3. Dans ce cas, les trois inductances de dérivation ne sont de préférence pas couplées magnétiquement entre elles. Chaque inductance de dérivation L_{D} peut être ou non couplée en série avec une résistance de dérivation R_{D}.

La figure 6 montre un exemple d'un second mode de réalisation de l'invention. Ce second mode de réalisation est plus adapté lorsque l'inductance de mode commun est en ferrite, c'est-à-dire avec une valeur d'inductance variant peu en fonction de la fréquence. Dans ce cas, l'invention prévoit un circuit de dérivation Z'_{D} connecté en parallèle avec au moins un des enroulements de l'inductance de mode commun L_{F}.

Ce circuit de dérivation Z'_{D} comporte un premier filtre passe-bande composé d'une première inductance L_{D1} reliée en série avec un premier condensateur C_{D1}. Les caractéristiques de l'inductance L_{D1} et du condensateur C_{D1} sont choisies pour que l'impédance du premier filtre passe-bande soit minimale autour d'une première valeur de la fréquence de résonance du filtre CEM. Ainsi, uniquement dans une zone de fréquence proche de cette valeur de fréquence de résonance, l'impédance du circuit de dérivation Z'_{D} sera inférieure à l'impédance de l'inductance de mode commun L_{F}, et le courant de mode commun sera donc préférentiellement détourné dans le circuit de dérivation Z'_{D} ce qui permettra d'éviter la saturation de l'inductance de mode commun L_{F} sans modifier les performances du filtre CEM dans la zone de fréquence de filtrage du filtre CEM (au-delà de 150 kHz).

Néanmoins, comme la fréquence de résonance du filtre CEM peut varier en fonction de la charge du variateur, il pourrait arriver que le premier filtre passe-bande ne soit pas toujours suffisamment efficace pour les différentes valeurs de la fréquence de résonance.

C'est pourquoi la figure 7 montre une variante du second mode de réalisation qui prévoit que le circuit de dérivation Z'_{D} comporte en plus un second filtre passe-bande connecté en parallèle avec au moins un des enroulements de l'inductance de mode commun L_{F} et en parallèle avec le premier filtre passe-bande. Ce second filtre est composé d'une seconde inductance L_{D2} reliée en série avec un second condensateur C_{D2}. Les caractéristiques de l'inductance L_{D2} et du condensateur C_{D2} sont choisies pour que l'impédance du second filtre passe-bande soit minimale autour d'une seconde valeur de la fréquence de résonance du filtre CEM, différente de la première valeur.

On peut par exemple choisir des caractéristiques de L_{D1} et C_{D1} adaptées pour une première valeur de la fréquence de résonance correspondant au fonctionnement du variateur relié à un moteur à vide et des caractéristiques de L_{D2} et C_{D2} adaptées pour une seconde valeur de la fréquence de résonance correspondant au fonctionnement du variateur relié à un moteur en charge maximale, de façon à couvrir le plus largement possible les différentes valeurs de la fréquence de résonance du filtre CEM.

Il est bien entendu que l'on peut, sans sortir du cadre de l'invention, imaginer d'autres variantes et perfectionnements de détail et de même envisager l'emploi de moyens équivalents.

## Revendications

1. Dispositif de filtrage connecté entre un module redresseur (20) d'un variateur de vitesse et un réseau d'alimentation alternatif (40), le dispositif de filtrage comportant un filtre CEM comprenant une inductance de mode commun (L_{F}) possédant un enroulement sur chaque phase du réseau d'alimentation, lesdits enroulements étant couplés magnétiquement entre eux, **caractérisé en ce que** le dispositif de filtrage comprend un circuit de dérivation (Z_{D}, Z'_{D}) connecté en parallèle avec au moins un des enroulements de l'inductance de mode commun (L_{F}), le circuit de dérivation (Z_{D}, Z'_{D}) étant constitué de composants passifs et permettant de dériver un courant de mode commun circulant dans l'inductance de mode commun (L_{F}) dans une zone de fréquence autour d'une fréquence de résonance du filtre CEM.

2. Dispositif de filtrage selon la revendication 1, **caractérisé en ce que** le circuit de dérivation (Z_{D}) comporte une inductance de dérivation (L_{D}) dont la valeur est inférieure à la valeur de l'inductance de mode commun (L_{F}) dans la zone de fréquence autour d'une fréquence de résonance du filtre CEM et est supérieure à la valeur de l'inductance de mode commun (L_{F}) dans la zone de fréquence de filtrage du filtre CEM.

3. Dispositif de filtrage selon la revendication 2, **caractérisé en ce que** l'inductance de dérivation (L_{D}) est réalisée en ferrite et l'inductance de mode commun (L_{F}) est réalisée en nano-cristallin.

4. Dispositif de filtrage selon la revendication 2, **caractérisé en ce que** le circuit de dérivation (Z_{D}) comporte en plus une résistance de dérivation (R_{D}) reliée en série avec l'inductance de dérivation (L_{D}).

5. Dispositif de filtrage selon l'une des revendications 2 à 4, **caractérisé en ce que** le circuit de dérivation (Z_{D}) comprend plusieurs inductances de dérivation (L_{D}), chaque inductance de dérivation (L_{D}) étant connectée en parallèle avec respectivement chaque enroulement de l'inductance de mode commun (L_{F}).

6. Dispositif de filtrage selon la revendication 1, **caractérisé en ce que** le circuit de dérivation (Z'_{D}) comporte un premier filtre passe-bande connecté en parallèle avec au moins un des enroulements de l'inductance de mode commun (L_{F}) et composé d'une première inductance (L_{D1}) reliée en série avec un premier condensateur (C_{D1}), l'impédance du premier filtre passe-bande étant minimale autour d'une première valeur de la fréquence de résonance du filtre CEM.

7. Dispositif de filtrage selon la revendication 6, **caractérisé en ce que** le circuit de dérivation (Z'_{D}) comporte un second filtre passe-bande connecté en parallèle avec au moins un des enroulements de l'inductance de mode commun (L_{F}) et composé d'une seconde inductance (L_{D2}) reliée en série avec un second condensateur (C_{D2}), l'impédance du second filtre passe-bande étant minimale autour d'une seconde valeur de la fréquence de résonance du filtre CEM.

8. Dispositif de filtrage selon la revendication 6 ou 7, **caractérisé en ce que** l'inductance de mode commun (L_{F}) est réalisée en ferrite.

9. Variateur de vitesse alimenté par un réseau d'alimentation alternatif extérieur et destiné à la commande d'un moteur électrique, **caractérisé en ce qu'**il comporte un dispositif de filtrage selon l'une des revendications précédentes.
